# FASCICULE DE BREVET EUROPEEN

(11) **EP 4 037 957 B1**
(45) Date de publication et mention de la délivrance du brevet: **13.09.2023**
(21) Numéro de dépôt: 20785821.8
(22) Date de dépôt: 21.09.2020
(51) Int. Cl.: B62D 25/08, B62D 21/15

(54) **ABSORBEUR DE CHOC LATÉRAL POUR VÉHICULE AUTOMOBILE**
SEITENAUFPRALLDÄMPFER FÜR EIN KRAFTFAHRZEUG
SIDE IMPACT ABSORBER FOR A MOTOR VEHICLE

(30) Priorité: 04.10.2019 FR 1911026
(43) Date de publication de la demande: 10.08.2022
(73) Titulaire: PSA Automobiles SA, 78300 Poissy (FR)
(72) Inventeur: BENANE, Said, 94240 L HAY LES ROSES (FR)
(86) Numéro de dépôt international: PCT/FR2020/051638
(87) Numéro de publication internationale: WO 2021/064307

(56) Documents cités:
- EP-A1- 3 395 653
- US-A1- 2013 249 243
- US-B2- 9 580 109

## Description

Le contexte technique de la présente invention est celui des éléments de véhicules automobiles servant à amortir des chocs susceptibles de survenir sur un côté d'un véhicule automobile, et plus particulièrement des absorbeurs de choc dédiés aux chocs latéraux susceptibles de survenir à hauteur de roues. Plus particulièrement, l'invention a trait à un absorbeur de choc latéral pour véhicule automobile.

Dans l'état de la technique, on connait le document US9580109 B2 qui décrit un absorbeur de choc de véhicule automobile. Cet absorbeur de choc est configuré pour protéger un support de ressort d'amortisseur sous forme de coupelle. La structure rigide de cet absorbeur de choc est configurée pour pouvoir se déformer afin d'amortir un effort dû à l'amortisseur, autrement dit un effort selon une direction verticale, dite en Z.

L'inconvénient de cet absorbeur de choc pour roue arrière de véhicule automobile est qu'il n'est pas configuré pour absorber un choc latéral, dit en Y. En d'autres termes, cet absorbeur de choc est inefficace dans la protection du support d'amortisseur dans le cas de collisions latérales au véhicule automobile.

La présente invention a pour objet de proposer un absorbeur de choc latéral pour véhicule automobile afin de répondre au moins en grande partie aux problèmes précédents et de conduire en outre à d'autres avantages.

Un autre but de l'invention est de proposer un absorbeur de choc latéral qui soit fiable dans son fonctionnement.

Un autre but de l'invention est de proposer un absorbeur de choc latéral qui soit universel et polyvalent, et qui puisse s'adapter à différents types de véhicules automobiles.

Un autre but de l'invention est de proposer un absorbeur de choc latéral qui soit compatible avec le fonctionnement de l'amortisseur et du support d'amortisseur.

Selon un premier aspect de l'invention, on atteint au moins l'un des objectifs précités avec un absorbeur de choc latéral pour véhicule automobile, l'absorbeur de choc latéral comportant (i) une coque intérieure formée par une aile intérieure qui s'étend relativement à une patte intérieure de fixation et à une plateforme intérieure d'impact, l'aile intérieure étant pliée simultanément par rapport à la patte intérieure de fixation et à la plateforme intérieure d'impact de sorte à former ensemble une première surface concave, (ii) une coque extérieure formée par une aile extérieure qui s'étend relativement à une patte extérieure de fixation et à une plateforme extérieure d'impact, l'aile extérieure étant pliée simultanément par rapport à la patte extérieure de fixation et à la plateforme extérieure d'impact de sorte à former ensemble une deuxième surface concave, la coque extérieure étant fixée solidairement à la coque intérieure au niveau de leur patte de fixation respectives et de leurs plateforme d'impact respectives.

Dans l'absorbeur de choc latéral selon l'invention, la coque intérieure forme un ensemble monobloc. L'aile intérieure, la plateforme intérieure d'impact et la patte intérieure de fixation ne peuvent être dissociées les unes des autres sans que ne soit porté atteinte à l'intégrité de ladite coque intérieure. La coque intérieure est pliée afin de délimiter en partie une cavité - en collaboration avec la coque extérieure. Par exemple, la coque intérieure est formée à partir d'une plaque pliée pour que l'aile intérieure, la plateforme intérieure d'impact et la patte intérieure de fixation se démarquent les unes des autres. Dans l'absorbeur de choc latéral, la coque extérieure forme un ensemble monobloc. L'aile extérieure, la plateforme extérieure d'impact et la patte extérieure de fixation ne peuvent être dissociées les unes des autres sans que ne soit porté atteinte à l'intégrité de ladite coque extérieure. La coque extérieure est pliée afin de délimiter en partie une cavité - en collaboration avec la coque intérieure. Par exemple, la coque extérieure est formée à partir d'une plaque pliée pour que l'aile extérieure, la plateforme extérieure d'impact et la patte extérieure de fixation se démarquent les unes des autres.

L'aile intérieure de la coque intérieure est destinée à permettre la fixation de la coque intérieure contre une pièce de structure d'un véhicule automobile. Par exemple, l'aile intérieure de la coque intérieure est avantageusement destinée à permettre la fixation de la coque intérieure contre un support de roue de véhicule automobile.

L'aile extérieure de la coque extérieure est destinée à permettre la fixation de la coque extérieure contre une pièce de structure d'un véhicule automobile. Par exemple, l'aile extérieure de la coque extérieure est avantageusement destinée à permettre la fixation de la coque intérieure contre un support d'amortisseur du véhicule automobile.

La plateforme intérieure d'impact de la coque intérieure et la plateforme extérieure d'impact de la coque extérieure sont destinées à être placées sous une aile du véhicule automobile, autrement dit du côté intérieur de ladite aile du véhicule automobile. Dans cette configuration et lors d'un choc survenant au niveau de l'aile du véhicule équipé d'un absorbeur de choc latéral selon l'invention, la plateforme intérieure d'impact et la plateforme extérieure d'impact distribuent l'énergie mécanique dudit choc de manière à ce que l'absorbeur de choc dissipe ensuite cette énergie. Ainsi, la plateforme intérieure d'impact et la plateforme extérieure d'impact sont les premières parties de l'absorbeur de choc latéral à être déformées lors du choc. En fonction de l'intensité du choc latéral, la déformation des plateformes intérieure et extérieure d'impact est plastique. Avantageusement, la déformation subie par la plateforme intérieure d'impact et par la plateforme extérieure d'impact est du type d'une compression.

L'aile intérieure de la coque intérieure forme, avec la patte intérieure de fixation de la coque intérieure et la plateforme intérieure d'impact de la coque intérieure, une demi-cavité fermée selon trois côtés. La cavité est délimitée par la première surface concave.

L'aile extérieure de la coque extérieure forme, avec la patte extérieure de fixation de la coque extérieure et la plateforme extérieure d'impact de la coque extérieure, une demi-cavité fermée selon trois côtés. La cavité est délimitée par la deuxième surface concave.

Chaque demi-cavité formée respectivement par l'aile intérieure de la coque intérieure et par l'aile extérieure de la coque extérieure forment ensemble une cavité de l'absorbeur de choc latéral et qui permet d'absorber l'énergie mécanique provenant du choc et de la dissiper dans la structure du véhicule automobile sans endommager une traverse latérale dudit véhicule automobile et situé à proximité de l'absorbeur de choc latéral.

La patte intérieure de fixation de la coque intérieure et la patte extérieure de la coque extérieure sont fixées solidairement l'une à l'autre. La patte intérieure de fixation de la coque intérieure et la patte extérieure de la coque extérieure sont configurées pour être fixées solidairement l'une à l'autre de façon définitive, chaque élément ne pouvant être séparé de l'autre sans destruction et/ou endommagement d'une partie de l'un et/ou de l'autre des éléments. Un exemple de fixation définitive est par soudage et/ou par rivetage de la patte extérieure de la coque extérieure sur la patte intérieure de fixation de la coque intérieure.

Lorsque la patte intérieure de fixation de la coque intérieure et la patte extérieure de la coque extérieure sont fixées solidairement l'une à l'autre, la coque intérieure et la coque extérieure forment ensemble une cavité fermée sur quatre côtés.

L'aile intérieure de la coque intérieure et l'aile extérieure de la coque extérieure sont configurées pour fléchir suite à la déformation de la plateforme extérieure d'impact et de la plateforme intérieure d'impact.

L'invention conforme à son premier aspect permet ainsi avantageusement d'absorber un choc survenant au niveau de la plateforme intérieure d'impact et de la plateforme extérieure d'impact.

L'absorbeur de choc latéral conforme au premier aspect de l'invention comprend avantageusement au moins un des perfectionnements ci-dessous, les caractéristiques techniques formant ces perfectionnements pouvant être prises seules ou en combinaison :
- la coque intérieure est fixée solidairement à l'intérieur de la deuxième surface concave de la coque extérieure. La coque intérieure et la coque extérieure sont configurées pour être rapportées l'une sur l'autre et fixées solidairement l'une à l'autre de façon définitive. La coque intérieure et la coque extérieure ne peuvent être séparées l'une de l'autre sans destruction et/ou endommagement de la coque intérieure et/ou la coque extérieure. Un exemple de fixation définitive est par soudage et/ou par rivetage de la coque extérieure sur la coque intérieure ;
- la plateforme intérieure d'impact et la plateforme extérieure d'impact ont des formes complémentaires afin d'être mises en appui l'une contre l'autre dans l'absorbeur de choc latéral. Autrement dit, la plateforme intérieure et la plateforme extérieure s'imbriquent l'une dans l'autre et se chevauchent ;
- la plateforme intérieure d'impact et la plateforme extérieure d'impact sont fixées solidairement l'une à l'autre par soudage ;
- la coque intérieure et la coque extérieure forment ensemble une surface conique ;
- l'aile intérieure de la coque intérieure comprend une zone intérieure de compression au niveau d'une extrémité de l'aile intérieure proximale de la plateforme intérieure d'impact et une zone intérieure de flexion située dans le prolongement de la zone intérieure de compression, au niveau d'une extrémité de l'aile intérieure distale de la plateforme intérieure d'impact. La zone intérieure de compression est configurée pour être déformée en compression lors d'un effort mécanique au niveau de la plateforme intérieure d'impact. La zone intérieure de flexion est configurée pour transmettre un effort de flexion vers l'extérieur de la première surface concave, l'aile intérieure s'écartant de l'aile extérieure. C'est suite à la compression de la zone intérieure de compression que la zone intérieure de flexion se déforme ;
- la zone intérieure de compression et la zone intérieure de flexion forment un premier angle non nul. En ce sens, la zone intérieure de compression s'étend dans un plan transverse à celui de la zone intérieure de flexion ;
- une valeur du premier angle est comprise entre 15° et 35°. Préférentiellement, une valeur du premier angle est égale à 25° ;
- l'aile intérieure de la coque intérieure comprend, au niveau d'une extrémité distale de la plateforme intérieure d'impact, une jambe de force intérieure destinée à collaborer avec un support de roue de véhicule automobile. La jambe de force intérieure améliore le positionnement de l'absorbeur de choc latéral au niveau du support de roue. Elle améliore également le comportement de l'absorbeur de choc latéral consécutivement au choc, en participant à la transmission de l'effort vers le support de roue et en évitant un cisaillement de l'absorbeur de choc latéral. Avantageusement, la jambe de force intérieure s'étend perpendiculairement à la zone intérieure de flexion ;
- la jambe de force intérieure s'étend perpendiculairement à la patte intérieure de fixation ;
- l'aile extérieure de la coque extérieure comprend une zone extérieure de compression au niveau d'une extrémité de l'aile extérieure proximale de la plateforme extérieure d'impact et une zone extérieure de flexion située dans le prolongement de la zone extérieure de compression, au niveau d'une extrémité de l'aile extérieure distale de la plateforme extérieure d'impact. La zone extérieure de compression est configurée pour être déformée en compression lors d'un effort mécanique au niveau de la plateforme extérieure d'impact. La zone extérieure de flexion est configurée pour transmettre un effort de flexion vers l'extérieur de la deuxième surface concave, l'aile extérieure s'écartant de l'aile intérieure. C'est suite à la compression de la zone extérieure de compression que la zone extérieure de flexion se déforme ;
- la zone extérieure de compression et la zone extérieure de flexion formant un deuxième angle non nul. En ce sens, la zone extérieure de compression s'étend dans un plan transverse à celui de la zone extérieure de flexion ;
- une valeur du premier angle est comprise entre 15° et 35°. Préférentiellement, une valeur du premier angle est égale à 25° ;
- la zone extérieure de compression s'étend au-delà de la zone intérieure de compression, relativement à la plateforme extérieure d'impact ;
- la patte extérieure de fixation de la coque extérieure comprend, au niveau d'une extrémité proximale de la plateforme extérieure d'impact, une jambe de force extérieure destinée à collaborer avec un support d'amortisseur de véhicule automobile. La jambe de force extérieure améliore le positionnement de l'absorbeur de choc latéral au niveau du support d'amortisseur. Elle améliore également le comportement de l'absorbeur de choc latéral consécutivement au choc, en participant à la transmission de l'effort vers le support d'amortisseur et en évitant un cisaillement de l'absorbeur de choc latéral ;
- la jambe de force extérieure s'étend perpendiculairement à la patte extérieure de fixation ;
- la jambe de force extérieure s'étend de manière sensiblement perpendiculaire à la jambe de force intérieure ;
- la coque extérieure et/ou la coque intérieure est formée d'acier ;
- la coque extérieure et/ou la coque intérieure prennent la forme d'une plaque d'épaisseur constante. L'épaisseur de la coque intérieure est mesurée entre la première surface de la coque intérieure et une surface de la coque intérieure qui lui est opposée. L'épaisseur de la coque extérieure est mesurée entre la deuxième surface de la coque extérieure et une surface de la coque extérieure qui lui est opposée ;
- une épaisseur de la coque extérieure et/ou de la coque intérieure est inférieure à 5 mm. Préférentiellement, l'épaisseur de la coque extérieure et/ou de la coque intérieure est égale à 3 mm ;
- la coque extérieure et/ou la conque intérieure sont formées par emboutissage. L'emboutissage permet de plier la plaque formant la coque extérieure pour délimiter l'aile extérieure, la plateforme extérieure d'impact et la patte extérieure de fixation. L'emboutissage permet de plier la plaque formant la coque intérieure pour délimiter l'aile intérieure, la plateforme intérieure d'impact et la patte intérieure de fixation. Il permet également de former les jambes de forces.

Selon un deuxième aspect de l'invention, il est proposé un ensemble structurel de véhicule automobile, l'ensemble structurel comportant (i) au niveau d'un premier côté latéral, un premier longeronnet d'élongation longitudinale situé dans le prolongement arrière d'un premier support de roue, le premier longeronnet étant fixé solidairement au premier support de roue par l'intermédiaire d'un premier absorbeur de choc latéral tel que précédemment décrit, (ii) au niveau d'un deuxième côté latéral, un deuxième longeronnet d'élongation longitudinale situé dans le prolongement arrière d'un deuxième support de roue, le deuxième longeronnet étant fixé solidairement au deuxième support de roue par l'intermédiaire d'un deuxième absorbeur de choc latéral tel que précédemment décrit, (iii) une traverse liant latéralement le premier longeronnet au deuxième longeronnet.

Chacun des absorbeurs de choc latéral est destiné à soulager la traverse de l'ensemble structurel de véhicule automobile consécutivement à un choc latéral.

En l'absence d'absorbeur de choc latéral, l'énergie mécanique due au choc serait transmise à la traverse qui se déformerait alors. La présence d'un absorbeur de choc latéral dans l'ensemble structurel conforme au deuxième aspect de l'invention évite que l'effort mécanique soit transmis à la traverse.

Le premier absorbeur de choc latéral permet de soulager la traverse consécutivement à un choc survenant au niveau du premier support de roue et/ou du premier côté latéral de l'ensemble structurel. Le deuxième absorbeur de choc latéral permet de soulager la traverse consécutivement à un choc survenant au niveau du deuxième support de roue et/ou du deuxième côté latéral de l'ensemble structurel.

Lorsque la zone intérieure de compression de l'un ou l'autre des absorbeurs de choc latéral est déformée par compression, elle transmet l'effort vers la zone intérieure de flexion. Puis ladite zone intérieure de flexion transmet l'effort de flexion vers le support de roue. Lorsque la zone extérieure de compression de l'un ou l'autre des absorbeurs de choc latéral est déformée par compression, elle transmet l'effort vers la zone extérieure de flexion. Puis ladite zone extérieure de flexion transmet l'effort de flexion vers le support d'amortisseur. L'effort mécanique dû au choc latéral est ainsi dévié de sa trajectoire et dissipé de part et d'autre de l'absorbeur de choc latéral.

L'ensemble structurel de véhicule automobile conforme au deuxième aspect de l'invention comprend avantageusement au moins un des perfectionnements ci-dessous, les caractéristiques techniques formant ces perfectionnements pouvant être prises seules ou en combinaison :
- l'ensemble structurel comprend un premier support d'amortisseur et un deuxième support d'amortisseur fixés solidairement, respectivement, au premier longeronnet et au deuxième longeronnet, au niveau d'une extrémité longitudinale avant située du côté du support de roue correspondant ;
- l'aile extérieure de la coque extérieure de chaque absorbeur de choc latéral est fixée solidairement au support d'amortisseur correspondant, et l'aile intérieure de la coque intérieure de chaque absorbeur de choc latéral est fixée solidairement au support de roue arrière correspondant. L'effort mécanique dû à un choc latéral est transmis par l'aile extérieure de la coque extérieure d'un des absorbeurs de choc latéral au support d'amortisseur et est transmis par l'aile intérieure de la coque intérieure du même absorbeur de choc latéral au support de roue. Cet effort mécanique est ainsi réparti longitudinalement entre le support de roue et le support d'amortisseur ;
- de façon préférentielle, l'aile extérieure de la coque extérieure de chaque absorbeur de choc latéral est fixée solidairement au support d'amortisseur correspondant par soudage ;
- de façon préférentielle, l'aile intérieure de la coque intérieure de chaque absorbeur de choc latéral est fixée solidairement au support de roue arrière correspondant par soudage.

Selon un troisième aspect de l'invention, il est proposé un véhicule automobile comportant un ensemble structurel tel que précédemment décrit. L'invention conforme à son troisième aspect permet ainsi avantageusement d'absorber un choc en Y survenant au niveau d'un support de roue dudit véhicule automobile équipé d'un ensemble structurel conforme au deuxième aspect de l'invention.

Dans le véhicule automobile conforme au troisième aspect de l'invention et dans l'un et l'autre des absorbeurs de choc latéral, la plateforme intérieure d'impact de la coque intérieure est présente du côté intérieur d'une aile du véhicule automobile. Dans cette configuration et lors d'un choc survenant au niveau de l'aile du véhicule équipé d'un absorbeur de choc latéral selon l'invention, la plateforme intérieure d'impact de la coque intérieure de l'absorbeur de choc latéral distribue l'énergie mécanique dudit choc de manière adéquate dans l'absorbeur de choc. Ainsi, la plateforme intérieure d'impact de la coque intérieure est la première partie de ladite coque intérieure à être déformée lors du choc. Avantageusement, la déformation est plastique. Avantageusement, la déformation est par compression.

Dans le véhicule automobile conforme au troisième aspect de l'invention et dans l'un et l'autre des absorbeurs de choc latéral, la plateforme extérieure d'impact de la coque extérieure est destinée à être présente du côté intérieur de l'aile du véhicule automobile. Dans cette configuration et lors d'un choc survenant au niveau de l'aile du véhicule équipé d'un absorbeur de choc latéral selon l'invention, la plateforme extérieure d'impact de la coque extérieure de l'absorbeur de choc latéral distribue l'énergie mécanique dudit choc de manière adéquate dans l'absorbeur de choc. Ainsi, la plateforme extérieure d'impact de la coque extérieure est la première partie de ladite coque extérieure à être déformée lors du choc. Avantageusement, la déformation est plastique. Avantageusement, la déformation est par compression.

Avantageusement dans le véhicule automobile conforme au troisième aspect de l'invention, l'ensemble structurel est positionné à l'arrière du véhicule automobile, le premier longeronnet et le deuxième longeronnet d'étendant de part et d'autre d'un coffre du véhicule automobile, le premier longeronnet et le deuxième longeronnet collaborant avec un pare-chocs arrière du véhicule automobile. L'ensemble structurel est alors dédié aux chocs latéraux arrières survenant au niveau d'une des ailes arrières du véhicule automobile.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] illustre une vue du dessus d'un véhicule automobile conforme au troisième aspect de l'invention équipé d'un ensemble structurel conforme au deuxième aspect de l'invention ;
[Fig.2] illustre de façon isolée un absorbeur de choc latéral conforme au premier aspect de l'invention ;
[Fig3] illustre une vue du dessous du véhicule automobile de la FIGURE 1 lorsque le véhicule automobile conforme au troisième aspect de l'invention est soumis à un choc latéral.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

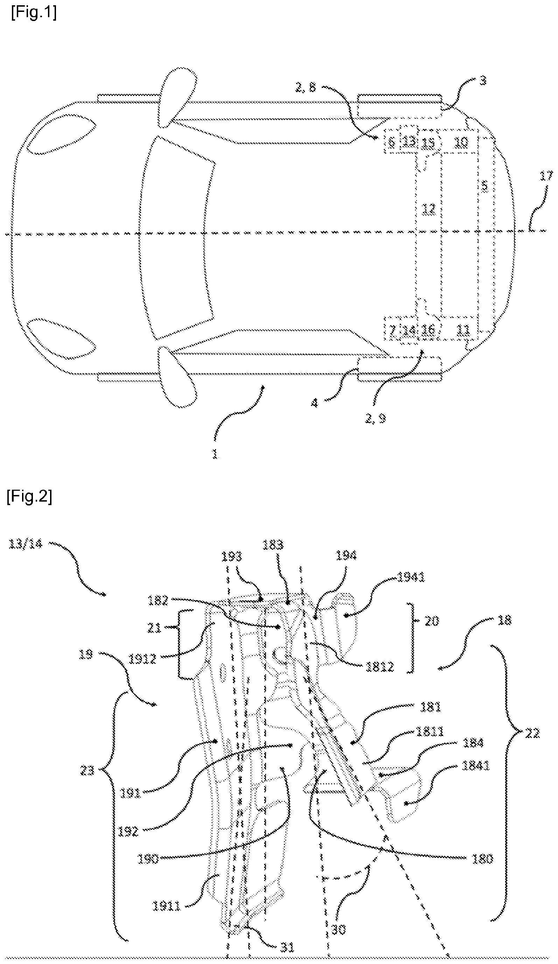

La FIGURE 1 montre un véhicule automobile 1 conforme au troisième aspect de l'invention. Le véhicule automobile 1 comprend un ensemble structurel 2. L'ensemble structurel 2 du véhicule automobile 1 est compris entre deux roues du véhicule automobile 1 et un pare-chocs du véhicule automobile 1. En l'espèce, l'ensemble structurel 2 du véhicule automobile 1 est compris entre une première roue arrière 3 du véhicule automobile 1, une deuxième roue arrière 4 du véhicule automobile 1, et un pare-chocs arrière 5 du véhicule automobile 1.

La première roue arrière 3 du véhicule automobile 1 est supportée par un premier support de roue 6 de l'ensemble structurel 2. La deuxième roue arrière 4 du véhicule automobile 1 est supportée par un deuxième support de roue 7 de l'ensemble structurel 2.

L'ensemble structurel 2 conforme au deuxième aspect de l'invention comporte un premier côté latéral 8 adjacent à la première roue arrière 3 du véhicule automobile 1, et un deuxième côté latéral 9 opposé au premier côté latéral 8 et adjacent à la deuxième roue arrière 4 du véhicule automobile 1.

Au niveau du premier côté latéral 8, l'ensemble structurel 2 comprend un premier longeronnet 10 d'élongation longitudinale situé dans le prolongement arrière du premier support de roue 6. Au niveau du deuxième côté latéral 9, l'ensemble structurel 2 comprend un deuxième longeronnet 11 d'élongation longitudinale situé dans le prolongement arrière du deuxième support de roue 7. Une traverse 12 de l'ensemble structurel 2 lie latéralement le premier longeronnet 10 au deuxième longeronnet 11 à l'une de leur extrémité. Le pare-chocs arrière 5 du véhicule automobile 1 lie latéralement le premier longeronnet 10 au deuxième longeronnet 11 à l'une de leur extrémité opposée.

Le premier longeronnet 10 est fixé solidairement au premier support de roue 6 par l'intermédiaire d'un premier absorbeur de choc latéral 13 conforme au premier aspect de l'invention.

Le deuxième longeronnet 11 est fixé solidairement au deuxième support de roue 7 par l'intermédiaire d'un deuxième absorbeur de choc latéral 14 conforme au premier aspect de l'invention.

Le premier absorbeur de choc latéral 13 est compris entre un premier support d'amortisseur 15 du véhicule automobile 1, et le premier support de roue 6, auxquels il est fixé solidairement. Le deuxième absorbeur de choc latéral 14 est compris entre un deuxième support d'amortisseur 16 du véhicule automobile 1, et le deuxième support de roue 7, auxquels il est fixé solidairement.

Le premier absorbeur de choc latéral 13 et le deuxième absorbeur de choc latéral 14 sont disposés symétriquement l'un l'autre dans le véhicule automobile 1, par rapport à un plan médian 17 du véhicule automobile 1, de sorte à parer de façon similaire à un choc latéral survenant à gauche ou à droite du véhicule automobile 1.

La FIGURE 2 illustre plus en détails l'un des deux absorbeurs de choc latéral 13, 14. Le premier absorbeur de choc latéral 13 et le deuxième absorbeur de choc latéral 14 sont identiques, la description faite est donc généralisée à un absorbeur de choc latéral 13, 14 conforme au premier aspect de l'invention.

L'absorbeur de choc latéral 13, 14 conforme au premier aspect de l'invention comporte une coque intérieure 18 et une coque extérieure 19 fixées solidairement l'une à l'autre.

La coque intérieure 18 de l'absorbeur de choc latéral 13, 14 est formée par une aile intérieure 181, une patte intérieure de fixation 182 et une plateforme intérieure d'impact 183.

L'aile intérieure 181 de la coque intérieure 18 de l'absorbeur de choc latéral 13, 14 comprend une extrémité 1811 distale de la plateforme intérieure d'impact 183, dite première extrémité 1811 de l'aile intérieure 181, et une extrémité 1812 proximale à la plateforme intérieure d'impact 183, dite deuxième extrémité 1812 de l'aile intérieure 181.

L'aile intérieure 181 de la coque intérieure 18 de l'absorbeur de choc latéral 13, 14 est pliée simultanément par rapport à la patte intérieure de fixation 182 de la coque intérieure 18 de l'absorbeur de choc latéral 13, 14 et à la plateforme intérieure d'impact 183 de la coque intérieure 18 de l'absorbeur de choc latéral 13, 14. L'aile intérieure 181, la patte intérieure de fixation 182 et la plateforme intérieure d'impact 183 forment ensemble une première surface concave 180.

La coque extérieure 19 de l'absorbeur de choc latéral 13, 14 est formée par une aile extérieure 191, une patte extérieure de fixation 192 et une plateforme extérieure d'impact 193.

L'aile extérieure 191 de la coque extérieure 19 de l'absorbeur de choc latéral 13, 14 comprend une extrémité 1911 distale de la plateforme extérieure d'impact 193 de la coque extérieure 19 de l'absorbeur de choc latéral 13, 14, dite première extrémité 1911 de l'aile extérieure 191, et une extrémité 1912 proximale à la plateforme extérieure d'impact 193, dite deuxième extrémité 1912 de l'aile extérieure 191.

L'aile extérieure 191 de la coque extérieure 19 de l'absorbeur de choc latéral 13, 14 est pliée simultanément par rapport à la patte extérieure de fixation 192 de la coque extérieure 19 de l'absorbeur de choc latéral 13, 14 et à la plateforme extérieure d'impact 193 de la coque extérieure 19 de l'absorbeur de choc latéral 13, 14. L'aile extérieure 191, la patte extérieure de fixation 192 et la plateforme extérieure d'impact 193 forment ensemble une deuxième surface concave 190.

La coque intérieure 18 de l'absorbeur de choc latéral 13, 14 est imbriquée dans la coque extérieure 19 de l'absorbeur de choc latéral 13, 14, qui la recouvre partiellement, les deux coques 18, 19 étant fixées l'une à l'autre au niveau de leurs pattes de fixation 182, 192 et de leurs plateformes d'impact 183, 193. Par « imbriquée » on comprend que la coque intérieure 18 de l'absorbeur de choc latéral 13, 14 et la coque extérieure 19 de l'absorbeur de choc latéral 13, 14 ont des formes complémentaires et sont en appui l'une contre l'autre dans l'absorbeur de choc latéral 13, 14 conforme au premier aspect de l'invention.

La patte extérieure de fixation 192 de la coque extérieure 19 de l'absorbeur de choc latéral 13, 14 comprend une jambe de force extérieure 194. Ladite jambe de force extérieure 194 s'étend du côté de la deuxième extrémité 1912 de l'aile extérieure 191, perpendiculairement à la patte extérieure de fixation 192. Une extrémité libre de la jambe de force extérieure 194 comprend une languette extérieure 1941 destinée à épouser le support d'amortisseur 15, 16 de véhicule automobile 1 avec lequel la patte extérieure de fixation 192 collabore.

La patte intérieure de fixation 182 de la coque extérieure 19 de l'absorbeur de choc latéral 13, 14 comprend une jambe de force intérieure 184. Ladite jambe de force intérieure 184 s'étend au niveau de la première extrémité 1811 de l'aile intérieure 181 de la coque intérieure 18 de l'absorbeur de choc latéral 13, 14, perpendiculairement à la patte intérieure de fixation 182 et perpendiculairement à la jambe de force extérieure 194. Une extrémité libre de la jambe de force intérieure 184 comprend une languette intérieure 1941 destinée à épouser le support de roue 6, 7 de véhicule automobile 1 avec lequel la patte intérieure de fixation 182 collabore.

La patte extérieure de fixation 192 de la coque extérieure 19 de l'absorbeur de choc latéral 13, 14 est fixée solidairement à la patte intérieure de fixation 182 de la coque intérieure 18 de l'absorbeur de choc latéral 13, 14 à l'intérieur de la deuxième surface concave 190 de la coque extérieure 19 de l'absorbeur de choc latéral 13, 14. La plateforme extérieure d'impact 193 de la coque extérieure 19 de l'absorbeur de choc latéral 13, 14 est fixée solidairement à la plateforme intérieure d'impact 183 de la coque intérieure 18 de l'absorbeur de choc latéral 13, 14 à l'intérieur de la deuxième surface concave 190 de la coque extérieure 19 de l'absorbeur de choc latéral 13, 14.

Chacune des ailes 181, 191 de l'absorbeur de choc latéral 13, 14 conforme au premier aspect de l'invention comprend une zone de compression 20, 21 : l'aile intérieure 181 de la coque intérieure 18 comprend une zone intérieure de compression 20 et l'aile extérieure 191 de la coque extérieure 19 comprend une zone extérieure de compression 21. Les zones de compression 20, 21 de chacune des ailes 181, 191 de l'absorbeur de choc latéral 13, 14 sont situées à l'extrémité 1812,1912 de ladite aile 181, 191 qui est prolongée par la plateforme d'impact 183, 193 correspondante.

Chacune des ailes 181, 191 de l'absorbeur de choc latéral 13, 14 conforme au premier aspect de l'invention comprend une zone de flexion 22, 23: l'aile intérieure 181 de la coque intérieure 18 de l'absorbeur de choc latéral 13, 14 comprend une zone intérieure de flexion 22 et l'aile extérieure 191 de la coque extérieure 19 comprend une zone extérieure de flexion 23. Les zones de flexion 22, 23 de chacune des ailes 181, 191 de l'absorbeur de choc latéral 13, 14 sont situées dans le prolongement de la zone de compression 20, 21 correspondante de ladite aile 181, 191 de l'absorbeur de choc latéral 13, 14, à l'opposé de la plateforme d'impact de ladite aile 181, 191 de l'absorbeur de choc latéral 13, 14. La zone de flexion 22, 23 est à l'arrière de la zone de compression 20, 21 par rapport à un choc latéral.

La FIGURE 2 montre que la zone intérieure de compression 20 de l'aile intérieure 181 de la coque intérieure 18 de l'absorbeur de choc latéral 13, 14 et la zone intérieure de flexion 22 de l'aile intérieure 181 de l'absorbeur de choc latéral 13, 14 forment ensemble un premier angle 30 non nul. La zone extérieure de compression 21 de l'aile extérieure 191 de la coque extérieure 19 de l'absorbeur de choc latéral 13, 14 et la zone extérieure de flexion 23 de l'aile extérieure 191 de la coque extérieure 19 de l'absorbeur de choc latéral 13, 14 forment un deuxième angle 31 non nul.

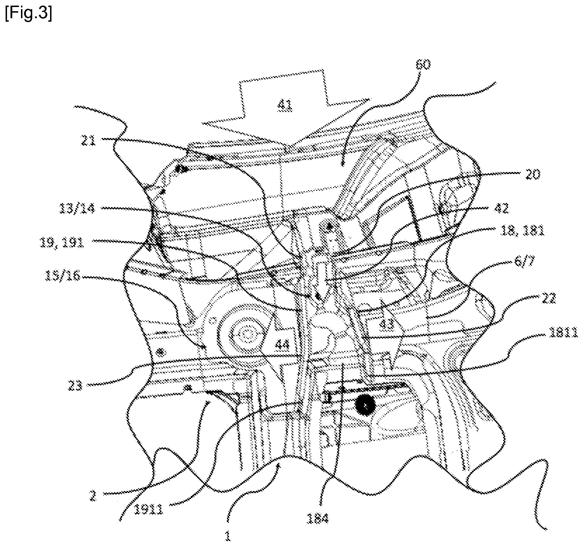

En référence à la FIGURE 3, l'absorbeur de choc latéral 13, 14 est illustré au sein du véhicule automobile 1 conforme au troisième aspect de l'invention. L'absorbeur de choc latéral 13, 14 est tel que décrit pour la FIGURE 2 et l'on pourra se reporter à la description de la FIGURE 2 pour la mise en oeuvre et la compréhension de l'invention.

Dans le véhicule automobile 1 conforme au troisième aspect de l'invention, l'absorbeur de choc latéral 13, 14 est, d'une part, en appui et fixé solidairement au support d'amortisseur 15, 16 de l'ensemble structurel 2 via l'aile extérieure 191 de la coque extérieure 19 dudit absorbeur de choc latéral 13, 14, et d'autre part, en appui et fixé solidairement au support de roue 6, 7 de l'ensemble structurel 2 via l'aile intérieure 181 de la coque intérieure 18 dudit absorbeur de choc latéral 13, 14.

Dans le véhicule automobile 1 conforme au troisième aspect de l'invention, la jambe de force extérieure 194 de la coque extérieure 19, non visible du fait de l'angle de vue, collabore avec le support d'amortisseur 15, 16 de véhicule automobile 1. La jambe de force intérieure 184 de la coque intérieure 18 collabore avec le support de roue 6, 7 de véhicule automobile 1.

L'absorbeur de choc latéral 13, 14 est en saillie du support de roue 6, 7 de l'ensemble structurel 2 du support d'amortisseur 15, 16 de l'ensemble structurel 2. La zone intérieure de compression 20 et la zone extérieure de compression 21 s'étendent entre le support de roue 6, 7 de l'ensemble structurel 2, le support d'amortisseur 15, 16 de l'ensemble structurel 2 et une aile 60 du véhicule automobile 1.

La FIGURE 3 montre comment se comporte l'ensemble structurel 2 conforme au deuxième aspect de l'invention consécutivement à un choc latéral générant un effort mécanique symbolisé par une première flèche 41.

Consécutivement au choc latéral, l'effort mécanique est absorbé par les zones de compression 20, 21 de l'absorbeur de choc latéral 13, 14. Les zones de compression 20, 21 se déforment par compression comme symbolisé par une deuxième flèche 42.

L'effort de compression est transmis aux zones de flexion 22, 23. De part le premier angle 30 non nul et le deuxième angle 31 non nul visibles en FIGURE 2, lors du choc latéral, l'aile intérieure 181 de la coque intérieure 18 de l'absorbeur de choc latéral 13, 14 et l'aile extérieure 191 de la coque extérieure 19 de l'absorbeur de choc latéral 13, 14 s'éloignent l'une l'autre, et notamment les premières extrémités 1811, 1911 d'ailes 181, 191 s'éloignent l'une de l'autre. L'aile intérieure 181 de la coque intérieure 18 de l'absorbeur de choc latéral 13, 14 et l'aile extérieure 191 de la coque extérieure 19 de l'absorbeur de choc latéral 13, 14 transmettent l'effort mécanique, respectivement au support de roue 6, 7 de l'ensemble structurel 2 comme symbolisé par une troisième flèche 43 et au support d'amortisseur 15, 16 de l'ensemble structurel 2 comme symbolisé par une quatrième flèche 44, préservant ainsi la traverse 12 de l'ensemble structurel 2.

En synthèse, l'invention concerne un absorbeur de choc latéral 13, 14 dont la conformation permet d'absorber un effort mécanique dû à un choc en déformant ledit absorbeur de choc latéral 13, 14 par compression au niveau d'une zone de compression 20, 21 et par flexion au niveau d'une zone de flexion 22, 23. L'absorbeur de choc latéral 13, 14 comprend une coque intérieure 18 collaborant avec une coque extérieure 19. Chaque coque 18, 19 comprend une aile 181, 182, une patte de fixation 182, 192 et une plateforme d'impact 183, 193, la plateforme d'impact 183, 193 et l'aile 181, 182 formant avec la patte de fixation 182, 192 une surface concave 180, 190. Les deux coques 18, 19 sont fixées solidairement l'une à l'autre au niveau de leurs pattes de fixation 182, 192 respectives afin de former une cavité fermée selon quatre côtés. [95]

## Revendications

1. Absorbeur de choc latéral (13, 14) pour véhicule automobile (1), l'absorbeur de choc latéral (13, 14) comportant une coque intérieure (18) formée par une aile intérieure (181) qui s'étend relativement à une patte intérieure de fixation (182) et à une plateforme intérieure d'impact (183),
**caractérisé en ce que** l'aile intérieure (181) est pliée simultanément par rapport à la patte intérieure de fixation (182) et à la plateforme intérieure d'impact (183) de sorte à former ensemble une première surface concave (180) ;
et **en ce que** l'absorbeur de choc latéral (13, 14) comporte en outre une coque extérieure (19) formée par une aile extérieure (191) qui s'étend relativement à une patte extérieure de fixation (192) et à une plateforme extérieure d'impact (193), l'aile extérieure (191) étant pliée simultanément par rapport à la patte extérieure de fixation (192) et à la plateforme extérieure d'impact (193) de sorte à former ensemble une deuxième surface concave (190), la coque extérieure (19) étant fixée solidairement à la coque intérieure (18) au niveau de leur patte de fixation (182, 192) respectives et de leurs plateforme d'impact (183, 193) respectives.

2. Absorbeur de choc latéral (13, 14) selon la revendication précédente, dans lequel la coque intérieure (18) est fixée solidairement à l'intérieur de la deuxième surface concave (190) de la coque extérieure (19).

3. Absorbeur de choc latéral (13, 14) selon l'une quelconque des revendications précédentes, dans lequel la plateforme intérieure d'impact (183) et la plateforme extérieure d'impact (193) ont des formes complémentaires afin d'être mises en appui l'une contre l'autre dans l'absorbeur de choc latéral (13, 14).

4. Absorbeur de choc latéral (13, 14) selon l'une quelconque des revendications précédentes, dans lequel l'aile intérieure (181) de la coque intérieure (18) comprend une zone intérieure de compression (20) au niveau d'une extrémité (1812) de l'aile intérieure (181) proximale de la plateforme intérieure d'impact (183) ; et une zone intérieure de flexion (22) située dans le prolongement de la zone intérieure de compression (20), au niveau d'une extrémité (1811) de l'aile intérieure (181) distale de la plateforme intérieure d'impact (183).

5. Absorbeur de choc latéral (13, 14) selon la revendication précédente, dans lequel la zone intérieure de compression (20) et la zone intérieure de flexion (22) formant un premier angle (30) non nul.

6. Absorbeur de choc latéral (13, 14) selon l'une quelconque des revendications précédentes, dans lequel l'aile extérieure (191) de la coque extérieure (19) comprend une zone extérieure de compression (21) au niveau d'une extrémité (1912) de l'aile extérieure (191) proximale de la plateforme extérieure d'impact (193) ; et une zone extérieure de flexion (23) située dans le prolongement de la zone extérieure de compression (21), au niveau d'une extrémité (1911) de l'aile extérieure (191) distale de la plateforme extérieure d'impact (193)

7. Absorbeur de choc latéral (13, 14) selon la revendication précédente, dans lequel la zone extérieure de compression (21) et la zone extérieure de flexion (23) forment un deuxième angle (31) non nul.

8. Absorbeur de choc latéral (13, 14) selon l'une quelconque des revendications 6 ou 7 prises en combinaison avec l'une quelconque des revendications 4 ou 5, dans lequel la zone extérieure de compression (21) s'étend au-delà de la zone intérieure de compression (20), relativement à la plateforme extérieure d'impact (193).

9. Ensemble structurel (2) de véhicule automobile (1), l'ensemble structurel (2) comportant :
- au niveau d'un premier côté latéral (8), un premier longeronnet (10) d'élongation longitudinale situé dans le prolongement arrière d'un premier support de roue (6), le premier longeronnet (10) étant fixé solidairement au premier support de roue (6) par l'intermédiaire d'un premier absorbeur de choc latéral (13) selon l'une quelconque des revendications précédentes;
- au niveau d'un deuxième côté latéral (9), un deuxième longeronnet (11) d'élongation longitudinale situé dans le prolongement arrière d'un deuxième support de roue (7), le deuxième longeronnet (11) étant fixé solidairement au deuxième support de roue (7) par l'intermédiaire d'un deuxième absorbeur de choc latéral (14) selon l'une quelconque des revendications précédentes;
- une traverse (12) liant latéralement le premier longeronnet (10) au deuxième longeronnet (11).

10. Véhicule automobile (1) comportant un ensemble structurel (2) selon la revendication précédente,

## Patentansprüche

1. Seitenaufprall-Absorber (13, 14) für ein Kraftfahrzeug (1), wobei der Seitenaufprall-Absorber (13, 14) eine Innenschale (18) aufweist, die von einem inneren Flügel (181) gebildet wird, der sich relativ zu einem inneren Befestigungslappen (182) und einer inneren Aufprallplattform (183) erstreckt.
Der innere Flügel (181) ist gleichzeitig gegenüber der inneren Befestigungslasche (182) und der inneren Prallplatte (183) gefaltet, sodass zusammen eine erste konkave Fläche (180) gebildet wird.
Ferner weist der Seitenaufprallabsorber (13, 14) eine Außenschale (19) auf, die von einem äußeren Schenkel (191) gebildet wird, der sich relativ zu einer äußeren Befestigungslasche (192) und einer äußeren Aufprallplattform (193) erstreckt, wobei der äußere Schenkel (191) gleichzeitig gegenüber der äußeren Befestigungslasche gefaltet ist (192) und der äußeren Prallplattform (193) eine zweite konkave Fläche (190) bilden, wobei die äußere Schale (19) an ihrer jeweiligen Befestigungslasche (182, 192) und ihrer Prallplattform (183, 199) fest mit der inneren Schale (18) verbunden ist 3.

2. Seitenaufprall-Absorber (13, 14) nach dem vorhergehenden Anspruch, wobei die Innenschale (18) integral innerhalb der zweiten konkaven Oberfläche (190) der Außenschale (19) befestigt ist.

3. Seitenaufprall-Absorber (13, 14) nach einem der vorhergehenden Ansprüche, bei dem die innere Aufprallplattform (183) und die äußere Aufprallplattform (193) komplementäre Formen aufweisen, um in dem seitlichen Aufprall-Absorber (13, 14) aneinander anliegen zu können.

4. Seitenaufprall-Absorber (13, 14) nach einem der vorhergehenden Ansprüche, wobei der innere Flügel (181) der inneren Schale (18) einen inneren Kompressionsbereich (20) an einem Ende (1812) des inneren Flügels (181) nahe der inneren Prallplatte (11) umfasst 83. und einem inneren Biegebereich (22), der sich in Verlängerung des inneren Druckbereichs (20) an einem Ende (1811) des inneren Flügels (181) befindet, das von der inneren Prallplattform (183) distal ist.

5. Seitenaufprall-Absorber (13, 14) nach dem vorhergehenden Anspruch, bei dem der innere Kompressionsbereich (20) und der innere Biegebereich (22) einen ersten Winkel (30) nicht Null bilden.

6. Seitenaufprall-Absorber (13, 14) nach einem der vorhergehenden Ansprüche, wobei der äußere Flügel (191) der äußeren Schale (19) einen äußeren Kompressionsbereich (21) an einem Ende (1912) des äußeren Flügels (191) nahe der äußeren Prallplatte (19) umfasst 93. und einem äußeren Biegebereich (23), der sich in der Verlängerung des äußeren Druckbereichs (21) an einem Ende (1911) des äußeren Flügels (191) befindet, das von der äußeren Prallplattform (193) distal ist

7. Seitenaufprall-Absorber (13, 14) nach dem vorhergehenden Anspruch, bei dem der äußere Kompressionsbereich (21) und der äußere Biegebereich (23) einen zweiten Winkel (31) nicht Null bilden.

8. Seitenaufprall-Absorber (13, 14) nach einem der Ansprüche 6 oder 7 in Kombination mit einem der Ansprüche 4 oder 5, wobei sich der äußere Kompressionsbereich (21) über den inneren Kompressionsbereich (20) hinaus bezüglich der äußeren Prallplattform (193) erstreckt.

9. Baueinheit (2) eines Kraftfahrzeugs (1), wobei die Baueinheit (2) umfasst:
- an einer ersten seitlichen Seite (8) ein erster länglicher Längsträger (10), der sich in der hinteren Verlängerung eines ersten Radträgers (6) befindet, wobei der erste Längsträger (10) fest mit dem ersten Radträger (6) über einen ersten seitlichen Stoßdämpfer (13) nach einem der vorhergehenden Ansprüche verbunden ist;
- an einer zweiten Seitenseite (9) ein zweiter länglicher Längsträger (11), der sich in der hinteren Verlängerung eines zweiten Radträgers (7) befindet, wobei der zweite Längsträger (11) mit dem zweiten Radträger (7) über einen zweiten seitlichen Stoßdämpfer (14) nach einem der vorhergehenden Ansprüche fest verbunden ist;
- eine den ersten Längsträger (10) seitlich mit dem zweiten Längsträger (11) verbindende Traverse (12).

10. Kraftfahrzeug (1) mit einer Struktureinheit (2) nach dem vorhergehenden Anspruch.

## Claims

1. Side shock absorber (13, 14) for motor vehicles (1) means the side shock absorber (13, 14) with an inner hull (18) formed by an inner wing (181) that extends in respect of an inner fixing leg (182) and an inner impact platform (181) 83),
characterized as the inner wing (181) is folded simultaneously with the inner fastening leg (182) and the inner impact platform (183) so as to form together a first concave surface (180);
and in that the side impact absorber (13, 14) also includes an outer hull (19) formed by an outer wing (191) which extends in respect of an outer fixing leg (192) and an outer impact platform (193), the outer wing (191) being bent simultaneously with respect to the outer fixing leg (192) and the outer impact platform (193) so as to form together a second concave surface (190), the outer shell (19) being securely attached to the inner shell (18) at the level of their respective fixing legs (182, 192) and impact platforms (18) 3, 193).

2. Side shock Absorber (13:14) according to the previous claim, in which the inner hull (18) is securely attached to the interior of the second concave surface (190) of the outer hull (19).

3. Side impact Absorber (13:14) according to any of the previous claims, in which the inner impact platform (183) and the outer impact platform (193) have complementary forms in order to be supported against each other in the side impact absorber (13:14).

4. Side impact absorber (13:14) according to any of the previous claims, in which the inner wing (181) of the inner hull (18) includes an inner compression zone (20) at the end (1812) of the inner wing (181) proximal of the inner platform impact (183); and an inner bending zone (22) located in the extension of the inner compression zone (20), at one end (1811) of the inner wing (181) distal of the inner impact platform (183).

5. Side shock Absorber (13, 14) according to the previous claim, in which the inner compression zone (20) and the inner flexural zone (22) forming a first non-zero angle (30).

6. Side impact absorber (13, 14) according to any of the previous claims, in which the outer wing (191) of the outer hull (19) includes an outer compression zone (21) at the end (1912) of the outer wing (191) proximal to the outer platform impact assessment (1993); and an outer bending zone (23) located in the extension of the outer compression zone (21), at one end (1911) of the outer wing (191) distal of the outer impact platform (193).

7. Side shock Absorber (13, 14) according to the previous claim, in which the outer compression zone (21) and the outer bending zone (23) form a second, non-zero angle (31).

8. Side shock Absorber (13, 14) according to any of Claims 6 or 7 taken in combination with any of Claims 4 or 5, in which the outer compression zone (21) extends beyond the inner compression zone (20), in respect of the outer impact platform (193).

9. Structural set (2) of motor vehicle (1), structural set (2) comprising:
- at the level of a first lateral side (8), a first longitudinal length (10) located in the rear extension of a first wheel bracket (6), the first wheel bracket (10) being securely attached to the first wheel bracket (6) through a first side impact absorber (13) according to any of the previous claims;
- at the level of a second lateral side (9), a second longitudinal length (11) located in the rear extension of a second wheel bracket (7), the second wheel bracket (11) being securely attached to the second wheel bracket (7) through a second side impact absorber (14) according to any of the previous claims;
- a cross (12) connecting laterally the first longeronnet (10) to the second longeronnet (11).

10. Motor vehicle (1) having a structural assembly (2) as per the previous claim.
